# FASCICULE DE BREVET EUROPEEN

(11) **EP 4 041 026 B1**
(45) Date de publication et mention de la délivrance du brevet: **03.04.2024**
(21) Numéro de dépôt: 20797823.0
(22) Date de dépôt: 09.10.2020
(51) Int. Cl.: A46B 9/02, A46B 7/02, A46B 3/00, B33Y 10/00

(54) **APPLICATEUR POUR MASCARA**
MASCARA-APPLIKATOR
MASCARA APPLICATOR

(30) Priorité: 10.10.2019 FR 1911256
(43) Date de publication de la demande: 17.08.2022
(73) Titulaire: Chanel Parfums Beauté, 92200 Neuilly-sur-Seine (FR)
(72) Inventeur: CASTEX, Nicolas, 92200 NEUILLY-SUR-SEINE (FR)
(74) Mandataire: Santarelli
(86) Numéro de dépôt international: PCT/FR2020/051788
(87) Numéro de publication internationale: WO 2021/069850

(56) Documents cités:
- WO-A1-2017/212123
- DE-U1-202017 100 134
- US-A1- 2008 245 382

## Description

La présente invention concerne le domaine des applicateurs de produit cosmétique, et en particulier des applicateurs pour mascara.

Un article de mascara, ou « mascara », comprend classiquement un étui, un réservoir de mascara et un pinceau applicateur. Le pinceau applicateur comporte une partie de préhension et un applicateur à proprement parler, qui se présente généralement sous la forme d'une brosse. Le pinceau applicateur peut comporter de manière connue, un capuchon ou bouchon adapté à obturer le réservoir en dehors des applications de mascara et qui peut former la zone de préhension du pinceau applicateur.

Il existe classiquement plusieurs types d'applicateurs : ceux de type « goupillon », ceux injectés et ceux fabriqués par fabrication additive (parfois appelée « synthèse additive »). La fabrication additive désigne les procédés de fabrication par ajout ou agrégation de matière.

Un applicateur de type goupillon comporte une brosse qui comprend des poils formés par des fibres emprisonnées dans un fil métallique torsadé formant l'âme de l'applicateur.

Un applicateur injecté est généralement formé d'une seule pièce et comporte des poils ou des dents, en matière plastique par exemple, généralement appelés protubérances. Un applicateur fabriqué par fabrication additive est lui aussi généralement d'une seule pièce et peut être formé par exemple à partir d'une poudre de polymères thermoplastiques via un procédé mettant par exemple en oeuvre la fusion de poudre par laser.

Quelle que soit la forme et le mode de réalisation d'un applicateur à mascara connu, le principe d'application du mascara consiste à charger l'applicateur en produit (mascara) contenu dans le réservoir, à extraire dudit réservoir l'applicateur dont les protubérances sont chargées en produit, et à réaliser l'application sur les cils ou les sourcils de l'utilisatrice.

Par simplicité, on évoque dans la suite du présent document uniquement les cils, sans toutefois exclure une utilisation du produit et de l'applicateur aux sourcils de l'utilisatrice.

L'un des inconvénients connus des applicateurs à mascara est que la charge de produit qu'il peut porter dans ses protubérances est relativement faible, ce qui oblige potentiellement l'utilisatrice à le recharger à plusieurs reprises lors d'une même application. En outre, une charge trop importante de l'applicateur doit être évitée car elle n'est adaptée à une application fine et régulière du mascara. Ainsi, le réservoir de l'article de mascara comporte, à proximité de son embouchure, un dispositif d'essorage ou « essoreur » au travers duquel l'applicateur passe lors de sa sortie du réservoir de sorte que l'applicateur porte dans ses protubérances, après sortie du réservoir, la charge de produit souhaitée, suffisante mais pas excessive, régulièrement répartie sur la surface et/ou dans les protubérances de l'applicateur. Pour recharger l'applicateur, l'utilisatrice doit le réintroduire dans le réservoir, et le sortir à nouveau. Cette opération est peu pratique, et l'application en elle-même du mascara est en outre complexifiée lorsqu'elle est réalisée en plusieurs fois. Le document EP 1 623 650 divulgue un applicateur pour produit cosmétique qui apporte une solution à ce problème en proposant un élément d'application comportant une cavité intérieure pouvant former une réserve de produit cosmétique. Néanmoins, la configuration d'applicateur proposée dans ce document se révèle imparfaite, voire inappropriée à l'application d'un mascara. En effet, l'applicateur proposé, et en particulier l'élément d'application formé entre deux branches floquées ou portant un revêtement par exemple textile est essentiellement destiné à l'application d'un produit sur la peau ou sur les lèvres. Employé pour appliquer un mascara, il n'est pas optimum pour ce qui concerne la qualité d'application du produit, par exemple en ce qui concerne la capacité à séparer et allonger les cils de l'utilisatrice, et à permette une application régulière du produit. La forme générale de cet applicateur n'est en outre pas optimale.

Le document US2008245382 divulgue un applicateur pour appliquer un produit sur les cils ou les sourcils, qui comprend une portion formant peigne qui comporte une rangée de dents ayant une forme sensiblement en hélice.

Les documents WO2017212123 et DE202017100134 divulguent d'autres applicateurs de l'art antérieur.

L'invention vise à proposer un dispositif applicateur pour mascara offrant une grande facilité d'utilisation, et en particulier une bonne autonomie lors de l'application, tout en garantissant une haute qualité d'application sur les cils de l'utilisatrice.

Ainsi, l'invention porte sur un applicateur pour mascara présentant une forme générale oblongue et s'étendant selon un axe principal, l'applicateur comportant au moins trois branches réparties autour de l'axe principal de sorte à définir entre elles une cavité interne à l'applicateur. Les branches de l'applicateur s'étendent entre une base à laquelle elles sont liées et une extrémité libre de l'applicateur, opposée à la base, et sont conformées de sorte que la cavité a une forme de révolution autour de l'axe principal, ladite cavité étant ouverte par des espaces formés entre lesdites branches.

Les branches s'étendent en hélice autour de l'axe principal. Les branches comportent chacune, sur une surface externe, des protubérances s'étendant perpendiculairement et radialement vis-à-vis de l'axe principal. La cavité ne contient aucun élément reliant la base et l'extrémité libre de l'applicateur. Chaque branche, partant de la base en direction de l'extrémité libre, s'écarte progressivement de l'axe principal avant de se rapprocher à proximité de l'extrémité libre. Les protubérances présentent une longueur variant le long de l'axe principal (8), la longueur des protubérances étant continûment croissante entre la base et un point de l'axe principal situé entre ladite base et l'extrémité libre de l'applicateur, et continûment décroissante entre ledit point de l'axe principal et l'extrémité libre de l'applicateur.

Les trois branches ou plus de l'applicateur permettent de définir une cavité de révolution permettant de retenir une certaine quantité de produit pouvant recharger la surface externe de l'applicateur lors de l'application de mascara sur les cils de l'utilisatrice. Les branches s'étendant autour d'un axe central et la conformation oblongue de l'applicateur lui confèrent une certaine souplesse, même lorsqu'il est constitué d'un matériau relativement rigide. Cette souplesse permet d'une façon avantageuse de faciliter la sortie de l'applicateur et optimiser son essorage évitant notamment l'accumulation irrégulière de produit sur les protubérances.

Les branches peuvent se rejoindre à proximité de l'extrémité libre de l'applicateur, où elles sont liées entre elles.

L'applicateur peut en particulier comporter cinq branches.

Cinq branches permettent de définir correctement la cavité interne de révolution, tout en ménageant entre les branches des espaces ou interstices pour le passage du produit. Une géométrie à cinq branches demeure en outre relativement simple.

Chaque protubérance de l'applicateur peut en particulier avoir une longueur comprise entre 0,2 mm et 2,5mm.

Sur chaque branche, les protubérances peuvent être alignées en deux rangées ou en trois rangées entre la base et l'extrémité libre.

La disposition des protubérances de l'applicateur proposée permet à l'applicateur de porter une charge satisfaisante de produit, mais également d'offrir un brossage et une séparation efficaces des cils.

Les protubérances de deux rangées adjacentes peuvent être disposées en quinconce. Dans une telle disposition en hélice, chaque branche peut tourner, de la base à l'extrémité libre de l'applicateur et autour de l'axe principal, d'un angle compris entre 45° et 90°, de préférence compris entre 55° et 75°

Des branches s'étendant en hélice permettent d'accompagner le mouvement naturel de l'utilisatrice lors de l'application de mascara, et améliore la séparation des cils.

L'applicateur de mascara peut être réalisé en un polymère thermoplastique choisi parmi :
- le polyamide,
- le polyacrylamide, et
- le polyéthercétonecétone.

L'applicateur peut être réalisé par fabrication additive par fusion sur lit de poudre d'un polymère thermoplastique.

Un procédé de fabrication additive permet l'obtention de la géométrie tridimensionnelle de l'applicateur. Des matériaux relativement rigides, facile à mettre en oeuvre dans le cadre d'un procédé de fabrication additive et permettant une grande finesse de réalisation, peuvent être employés car la géométrie de l'applicateur permet de lui conférer la souplesse souhaitée.

D'autres particularités et avantages de l'invention apparaîtront encore dans la description ci-après.

Aux dessins annexés, donnés à titre d'exemples non limitatifs :
- la figure 1 représente, selon une vue tridimensionnelle, un applicateur pour mascara conforme à un mode de réalisation de l'invention ;
- la figure 2 représente, selon une vue tridimensionnelle de dessus, l'applicateur de la figure 1 ;
- la figure 3 représente, selon une vue tridimensionnelle de côté, l'applicateur des figures 1 et 2 ;
- la figure 4 représente, selon une vue tridimensionnelle de côté similaire à celle de la figure 3, un applicateur selon un mode de réalisation alternatif de l'invention ;
- la figure 5 représente, selon une vue en coupe transversale partielle, un article de mascara comportant un applicateur conforme à un mode de réalisation de l'invention.

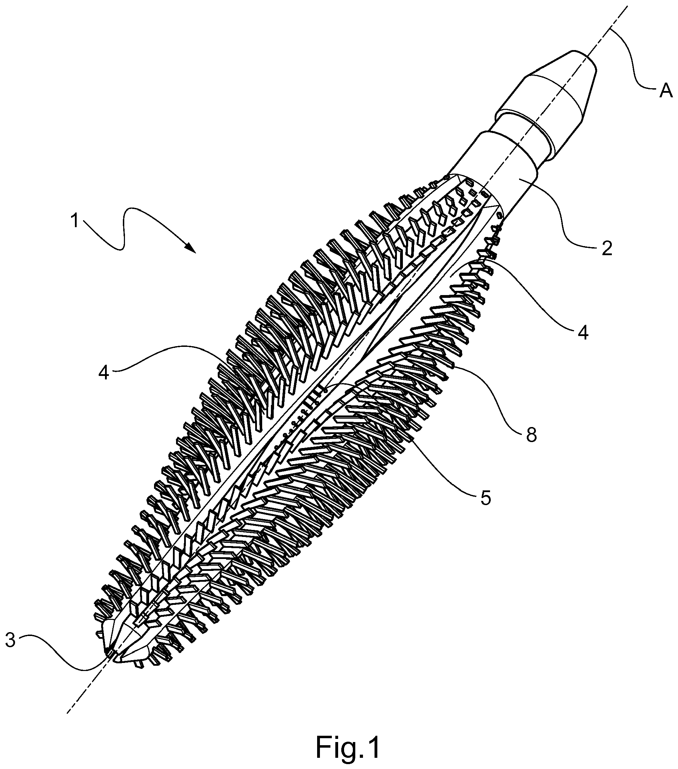

La figure 1 représente, selon une vue tridimensionnelle, un applicateur pour mascara conforme à un mode de réalisation de l'invention. L'applicateur 1 présente une forme générale oblongue et s'étend selon un axe principal A. En particulier, l'applicateur comporte à l'une de ses extrémités une base 2, et s'étend le long de l'axe A jusqu'à une extrémité libre 3.

Un applicateur conforme à l'invention comporte plusieurs branches 4 qui s'étendent entre la base 2 et l'extrémité libre 3. En particulier, l'applicateur comporte au moins trois banches. L'applicateur peut notamment comporter trois, quatre, cinq ou six branches. Chaque branche peut présenter, entre la base 2 et l'extrémité libre 3, une section transversale constante ou sensiblement constante, ou plus avantageusement une section dont les dimensions évoluent en fonction de la distance de la branche à l'axe principal.

Chaque branche 4 est liée à la base 2. En particulier, dans le cadre d'une réalisation monobloc de l'applicateur 1, chaque branche 4 est issue de la base 2.

Les branches 4 forment entre elles une cavité 5, interne à l'applicateur 1. La cavité 5 a une forme de révolution autour de l'axe principal A. En d'autre termes, en tout point de l'axe principal A entre la base 2 et l'extrémité libre 3, chaque branche 4 est à égale distance dudit axe principal A.

Dans l'exemple ici représenté, chaque branche 4, partant de la base 2 en direction de l'extrémité libre 3, s'écarte progressivement de l'axe principal A avant de se rapprocher et de se rapprocher à proximité de l'extrémité libre 3, de préférence à proximité immédiate de cette dernière afin de maximiser la longueur de la cavité 5. En particulier, plus la cavité 5 s'étend sur une forte proportion de la longueur de l'applicateur, plus ce dernier est susceptible de se recharger en produit sur une portion importante de sa longueur, lors de l'application de produit. La présence de la cavité 5 et la géométrie des branches 4 offrent en outre une certaine souplesse transversale à l'applicateur 1, en fonction de la section, de la longueur, de la forme et de la matière contitutive des branches 4.

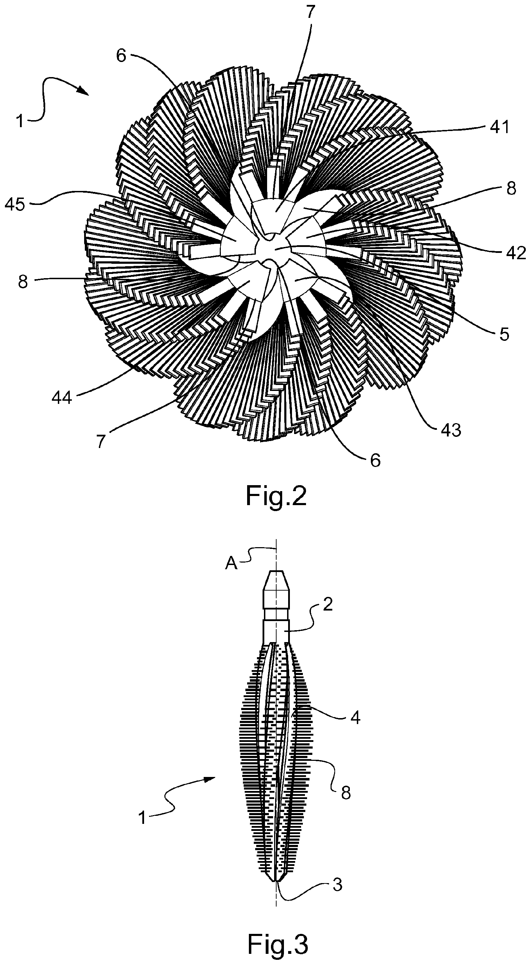

Comme illustré dans le présent mode de réalisation, et visible à la figure 2, l'applicateur peut par exemple comporter cinq branches 4, à savoir une première branche 41, une deuxième branche 42, une troisième branche 43, une quatrième branche 44 et une cinquième branche 45. La mise en oeuvre de cinq branches apparait comme un compromis particulièrement avantageux permettant de définir correctement la forme extérieure souhaitée pour l'applicateur ainsi que la forme souhaitée de la cavité 5, tout en laissant entre les branches 4 des espaces permettant de remplir la cavité de produit ainsi que de recharger correctement et régulièrement la surface externe de l'applicateur en produit. Un applicateur comprenant au moins trois branches, et en particulier cinq branches ou plus permet également d'améliorer la facilité d'application d'un produit avec ledit applicateur. Une telle configuration permet en effet d'avoir au moins une branche en contact avec la frange des cils quelque soit l'orientation de l'applicateur et la gestuelle de l'utilisatrice, que celle-ci effectue ou non un mouvement de rotation de l'applicateur lors de la mise ne contact avec ladite frange des cils.

La cavité 5 est ainsi définie à l'intérieur des surfaces internes 6 des branches 4. La surface interne 6 de chaque branche peut présenter une forme concave, en arc de cercle. La surface interne 6 de chaque branche 4 correspond ainsi parfaitement à une portion de surface de la cavité 5 de révolution que lesdites branches 4 définissent conjointement.

La section de chaque branche 4 peut ainsi être définie, comme illustré à la figure 2, entre une surface interne 6 et une surface externe 7 en arcs de cercles concentriques, centrés sur l'axe principal A, les bords droits latéraux 8 desdites sections s'étendant radialement depuis l'axe principal A.

Chaque branche 4 peut s'étendre dans un plan comprenant l'axe principal, mais, selon des modes de réalisation préférentiels de l'invention, les branches s'étendent en hélice autour de l'axe principal A. Ainsi, chaque branche 4 s'étend en spiralant autour de l'axe principal 1. Le pas de l'hélice formée par la branche 4 autour de l'axe principal A peut être constant, ou peut être variable entre la base 2 et le point de jonction des branches 4 à proximité de l'extrémité libre 3. Le pas de chaque branche est identique, de sorte que chaque branche 4 de l'applicateur 1 s'étend parallèlement aux deux branches situées de part et d'autre d'elle.

Sur la longueur de l'applicateur, entre la base 2 et l'extrémité libre 3, l'hélice formée par chaque branche peut être spécifiée par l'angle qu'elle forme autour de l'axe principal A (angle entre l'extrémité de la branche au niveau de la base 2 et l'extrémité de la branche au niveau de l'extrémité libre 3 ou du point de jonction des branches vers l'extrémité libre 3). Par exemple, chaque branche peut former un angle compris entre 0° (correspondant à une branche droite) et 360° (branche formant un tour complet entre la base 2 et l'extrémité libre 3), voire plus. Notamment, chaque branche peut former, sur la longueur de l'applicateur, un angle compris entre 45° et 90°.

Les figures 1 à 3 présentent en particulier un mode de réalisation d'un applicateur conforme à l'invention dans lequel chaque branche forme une hélice tournant sur 65° entre la base 2 et l'extrémité libre 3. Un tel mode de réalisation, grâce à la disposition en hélice des branches, est particulièrement avantageux pour accompagner la gestuelle d'application de l'utilisatrice et augmenter l'occurrence de contact entre une protubérance chargé de produit (par exemple de mascara) et un cil.

Chaque branche 4 porte sur sa surface extérieure 7 une ou plusieurs séries de protubérances. Par protubérance, il est entendu tout élément allongé de faible section adapté à porter, sur lui ou entre entre lui et une ou plusieurs protubérances voisines, une charge de produit, notamment de mascara. Une protubérance peut donc avoir, sans sortir du cadre de la présente invention, diverses constitutions, formes, et propriétés notamment pour ce qui concerne sa souplesse, sa rugosité, etc.

L'applicateur objet de l'invention étant tout particulièrement adapté à être formé de manière monobloc en un matériau plastique, notamment par un procédé de fabrication additive, chaque protubérance 8 peut notamment être formée du même matériau plastique que le reste de l'applicateur.

Chaque protubérance 8 peut avoir une forme de cylindre ou de prisme (de base sensiblement carrée, rectangulaire, ou de toute autre polygone régulier ou non). Les dimensions de la base d'un tel cylindre ou prisme sont avantageusement petites comparativement à la hauteur du cylindre ou prisme qui correspond à la longueur de la protubérance considérée. Par exemple, des protubérances sensiblement prismatiques de section carrée de 0,2 mm peuvent être employés avec succès. Bien évidemment, la section et le matériau employé pour former une protubérance 8 influent directement sur sa raideur. Une section carrée de 0,2 mm peut notamment être employée pour une brosse formée en polyamide 11 ou en un matériau aux propriétés mécaniques proches.

Les protubérances 8 de l'applicateur 1 ont deux fonctions principales, à savoir une fonction de rétention d'une certaine quantité de produit destiné à être appliqué sur les cils de l'utilisatrice, et une fonction de brossage des cils. Par brossage des cils, il est recherché un effet de séparation entre les cils, d'extension, voire de recourbement de ceux-ci.

De manière préférentielle, les protubérances 8 de l'applicateur 1 s'étendent perpendiculairement à l'axe principal A. En effet, lors de l'application de mascara, l'utilisatrice positionne l'applicateur sensiblement perpendiculairement à ses cils, et réalise un mouvement de brossage par translation de l'applicateur perpendiculairement à l'axe principal A, et/ou un mouvement de rotation de l'applicateur autour de l'axe principal A. Les protubérances 8 de l'applicateur 1 s'étendant perpendiculairement à l'axe principal A permettent ainsi de brosser et de séparer efficacement les cils de l'utilisatrice.

Une direction d'extension radiale des protubérances vis-à-vis de l'axe principal A est tout particulièrement favorable à la fonction de brossage de l'applicateur. En outre, le fait que chaque branche s'étende en hélice favorise également cette fonction de brossage, car lors de l'application les protubérances portées par une branche donnée viennent progressivement au contact et entre les cils de l'utilisatrice. En d'autre termes, les branches en hélice accompagnent la gestuelle habituelle de l'utilisatrice et augmentent l'occurrence de contact entre une protubérance chargée de produit et un cil de l'utilisatrice.

Les protubérances 8 sont réparties régulièrement le long de chaque branche 4. Chaque branche 4 peut notamment porter une, deux, ou trois rangées de protubérances. Une rangée de protubérances 8 correspond à un alignement de protubérances 8 sur la surface externe 7 d'une branche, de la base 2 jusqu'à l'extrémité libre 3. L'alignement suit la configuration générale de la branche (alignement droit pour une branche 4 droite, alignement en hélice comme dans l'exemple représenté pour une branche 4 en hélice).

Dans l'exemple ici représenté, chaque branche porte trois rangées de protubérances. Les rangées de protubérances peuvent par exemple être espacées en moyenne de 0,3 mm. En outre, chaque protubérances 8 d'une rangée est équidistante des protubérances adjacentes de la même rangée. Les protubérances d'une même rangée peuvent par exemple être distantes de 0,2 mm. Les protubérances de deux alignements adjacentes d'une même branche (lorsque plus d'un alignement est présent) sont en outre avantageusement disposées en quinconce, dans la direction définie par l'axe principal A. Cela garanti une meilleure répartition des protubérances à la surface de l'applicateur, et améliore tant la rétention du produit que le brossage des cils.

La longueur des protubérances peut être variable le long de l'axe principal A. En particulier, des protubérances courtes ont essentiellement un rôle dans la rétention de produit, tandis que des protubérances plus longues ont essentiellement un rôle de séparation et/ou de peignage des cils. En particulier, la longueur des protubérances peut, en partant de la base 2 et jusqu'à l'extrémité libre 3, croitre entre la base et un point de l'axe principal situé entre ladite base et l'extrémité de l'applicateur, puis décroitre entre ledit point de l'axe principal et l'extrémité de l'applicateur.

La longueur des protubérances 8 mis en oeuvre peut ainsi varier, à titre d'exemple, entre 0,2 mm et 2,5 mm.

Cette variation de longueur permet avantageusement de définir une forme enveloppe de l'applicateur oblongue et régulière. Par exemple, l'applicateur peut présenter en section une forme extérieure sensiblement éliptique.

Dans l'exemple de mode de réalisation représenté environ un tiers des protubérances, les plus courts, situés à proximité de base 2 et de l'extrémité libre 3, servent essentiellement à la rétention de produit, tandis que les deux tiers situés vers le centre de l'applicateur 1 servent tant à la rétention du produit qu'à une séparation efficace des cils.

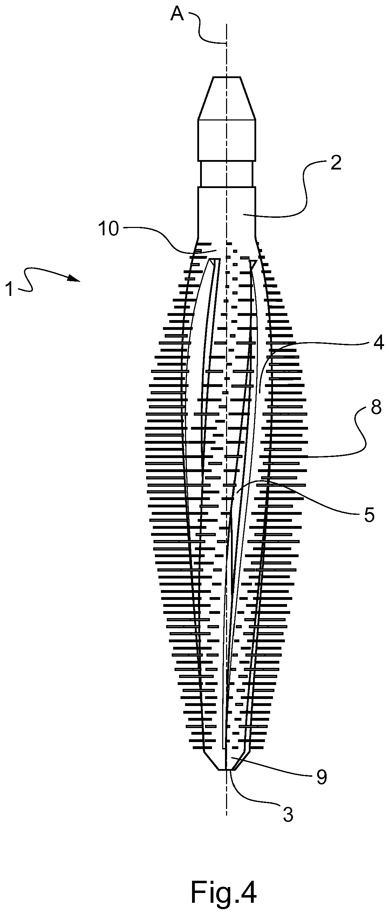

Les branches peuvent être liées entre elles au niveau de l'extrémité libre 3, comme illustré à la figure 4, et forment un embout 9. Dans l'exemple de la figure 4, les branches sont également jointes légèrement au-delà de la base 2, par un élément de matière 10 situé entre lesdites branches 4. L'une ou l'autre de ces caractéristiques peut être présente indépendamment l'une de l'autre selon des modes de réalisation de l'invention, ou conjointement comme dans le mode de réalisation de la figure 4.

Hormis le fait que les branches 4 se rejoignent à proximité de l'extrémité libre 3 et sont liées entre elles à cette extrémité libre de sorte à former un embout 9 unique, et la présence de l'élément de matière 10, le mode de réalisation de la figure 4 est identique à celui illustré aux figures 1 à 3. La description réalisée en référence aux figures 1 à 3 s'applique ainsi de manière générale au mode de réalisation de la figure 4.

Dans l'exemple de mode de réalisation représenté à la figure 4, l'élément de matière 10 et l'embout 9 s'étendent sur environ 20% de la longueur de l'applicateur (selon l'axe principal A, entre la base 2 et l'extrémité libre 3), de sorte que la cavité 5 s'étend sur environ 80% de la longueur de l'applicateur.

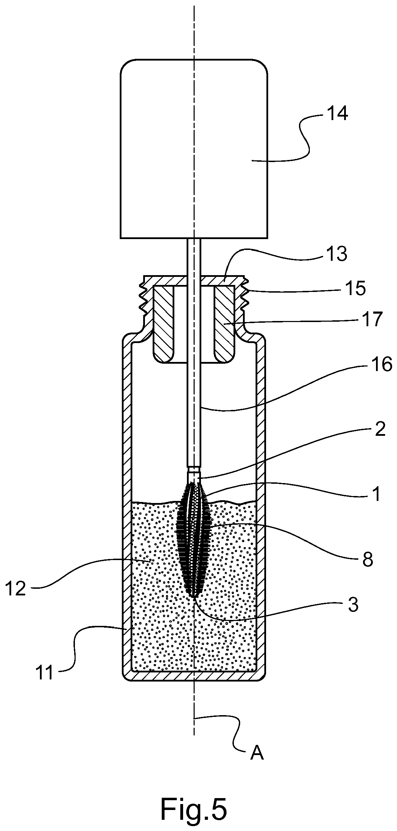

La figure 5 représente, à titre d'exemple, un article de mascara qui met en oeuvre un applicateur conforme à un mode de réalisation de la présente invention.

L'article de mascara comporte un réservoir 11 contenant un produit cosmétique 12 adapté à être appliqué sur les cils. Le réservoir comporte une embouchure 13, pouvant être fermée par un bouchon 14. Par exemple, l'embouchure 13 peut être formée par un goulot fileté 15 sur lequel peut être vissé le bouchon 14 qui comporte pour sa part un filetage correspondant. Sur la figure 5, afin de faciliter la visualisation, le réservoir 11 est représenté en coupe, tandis que l'applicateur 1 et le bouchon 14 sont représentés en vue de côté.

Dans l'exemple ici représenté, le bouchon 14 forme également la zone de préhension permettant de manipuler l'applicateur. En particulier, une tige 16 rigide relie le bouchon 14 à l'applicateur 1, coaxialement avec l'axe principal A de l'applicateur 1. La tige peut être aboutée à l'une de ses extrémités à la base 2 de l'applicateur, et fixée rigidement au bouchon 14 à son autre extrémité. Alternativement, la tige 16 peut être formée de manière monobloc avec l'applicateur.

Le réservoir 11 de l'article de mascara est équipé, à proximité de son embouchure (par exemple en tout ou partie dans le goulot fileté 15), d'un dispositif d'essorage 17 ou « essoreur ».

Le dispositif d'essorage 17 forme une restriction à l'embouchure de l'article de mascara, qui contraint transversalement (perpendiculairement à l'axe principal A) l'applicateur 1 lors de son passage dans ledit dispositif d'essorage 17.

Le dispositif d'essorage est formé d'un élément souple, permettant d'homogénéiser le produit cosmétique chargé sur l'applicateur 1. Lors de son passage dans l'essoreur, les branches 4 de l'essoreur sont déformées en direction de l'axe principal A, ce qui calibre la quantité de produit cosmétique contenue dans la cavité 5 de l'applicateur. La configuration de l'applicateur lui offrant une certaine souplesse transversale permet également l'emploi d'un dispositif d'essorage 17 plus petit que dans les articles de mascara connus dans l'état de la technique. Ainsi, au passage de l'essoreur, l'applicateur 1 est contraint vers l'axe principal 1, il se plie, ses protubérances sont éssorées, il dégorge une quantité de produit présent en excès dans la cavité 5. L'applicateur 1 reprend sa forme initiale, et notamment son diamètre hors tout, une fois extrait du réservoir 11 et sorti du dispositif d'essorage 17. Le produit résiduel dans la cavité 5 permet d'augmenter l'autonomie de l'applicateur et de limiter voire de supprimer les rechargements de l'applicateur lors d'une application.

Un applicateur 1 conforme à l'invention, du fait de sa géométrie, peut avantageusement être fabriqué par un procédé de fabrication additive.

Le document EP2120631 divulgue de manière générale un procédé d'obtention d'un applicateur cosmétique par fabrication additive. Un tel procédé peut être mis en oeuvre pour obtenir un applicateur conforme à un mode de réalisation de l'invention. Un procédé de fusion sur lit de poudre peut notamment être employé.

Notamment, une poudre d'un matériau thermoplastique peut être employé. Notamment, une poudre de polyamide (notamment de polyamide 11 ou de polyamide 12), de polyéthercétonecétone ou de polyacrylamide peut être employée.

La fabrication additive se révèle particulièrement adaptée à l'obtention de l'applicateur 1, notamment du fait de sa géométrie tridimensionnelle complexe comportant une cavité interne. Le polyamide 11 ou un matériau thermoplastique similaire est très bien adapté aux procédés de fabrication additive, notamment aux procédés de frittage. Ce matériau est cependant rigide, et réputé de ce fait peu adapté à la formation d'une brosse à mascara. Cependant, la configuration d'applicateur proposé, présentant une cavité interne, permet l'obtention d'une certaine souplesse transversale. La synergie entre les matériaux plastiques envisagés et la géométrie offrant une certaine souplesse à la partie centrale de l'applicateur permet ainsi l'obtention de propriétés mécaniques optimales pour un applicateur à mascara. La configuration proposée dans l'invention offre en particulier une souplesse de l'applicateur apportant des avantages pour optimier son l'essorage, pour sortir l'applicateur de son contenant, et pour rendre plus douce l'application sur les cils.

L'invention ainsi développée permet l'obtention d'un applicateur pour mascara offrant une grande autonomie grâce à une cavité interne. L'applicateur proposé a une configuration tridimensionnelle générale de révolution permettant une application aisée sur les cils. Selon divers modes de réalisation, la qualité de brossage et de séparation des cils est en outre optimisée.

L'applicateur proposé dans l'invention est particulièrement adapté à être obtenu par fabrication additive et tout particulièrement par un procédé de fusion de poudre de polymère par laser, ou technologie SLS pour l'acronyme anglophone de Sélective Laser Sistering » signifiant frittage sélectif au laser, la synergie entre le matériau employé et la géométrie de l'applicateur permettant l'obtention de propriétés mécaniques optimales pour l'applicateur.

## Revendications

1. Applicateur pour mascara présentant une forme générale oblongue et s'étendant selon un axe principal (A),
l'applicateur (1) comportant au moins trois branches (4) réparties autour de l'axe principal (A) de sorte à définir entre elles une cavité (5) interne à l'applicateur (1), et dans lequel les branches (4) s'étendent entre une base (2) à laquelle elles sont liées et une extrémité libre (3) de l'applicateur (1), opposée à la base (2), et sont conformées de sorte que la cavité (5) a une forme de révolution autour de l'axe principal (A), ladite cavité (5) étant ouverte par des espaces formés entre lesdites branches (4), les branches (4) comportant chacune, sur une surface externe (7), des protubérances (8) s'étendant perpendiculairement et radialement vis-à-vis de l'axe principal (A), les protubérances(8) présentent une longueur variant le long de l'axe principal (A), la longueur des protubérances (8) étant continûment croissante entre la base (2) et un point de l'axe principal (A) situé entre ladite base (2) et l'extrémité libre (3) de l'applicateur (1), et continûment décroissante entre ledit point de l'axe principal (A) et l'extrémité libre (3) de l'applicateur (1),
**caractérisé en ce que** :
- lesdites branches (4) s'étendent en hélice autour de l'axe principal (A),
- la cavité ne contient aucun élément reliant la base (2) et l'extrémité libre (3) de l'applicateur (1),
- chaque branche (4), partant de la base (2) en direction de l'extrémité libre (3), s'écarte progressivement de l'axe principal A avant de se rapprocher à proximité de l'extrémité libre (3).

2. Applicateur pour mascara selon la revendication 1, dans laquelle les branches (4) se rejoignent à proximité de l'extrémité libre (3) où elles sont liées entre elles.

3. Applicateur pour mascara selon la revendication 1 ou la revendication 2 dont les branches sont au nombre de cinq (41...45).

4. Applicateur pour mascara selon l'une des revendications précédentes, chaque protubérance de l'applicateur ayant une longueur comprise entre 0,2 mm et 2,5mm.

5. Applicateur pour mascara selon l'une des revendications précédentes, dans lequel, sur chaque branche (4), les protubérances (8) sont alignées en deux rangées ou en trois rangées entre la base (2) et l'extrémité libre (3).

6. Applicateur pour mascara selon la revendication 5, dans lequel les protubérances (8) de deux rangées adjacentes sont disposés en quinconce.

7. Applicateur pour mascara selon l'une des revendications précédentes, dans lequel chaque branche tourne, de la base (2) à l'extrémité libre (3) de l'applicateur et autour de l'axe principal (A), d'un angle compris entre 45° et 90°, de préférence compris entre 55° et 75°.

8. Applicateur de mascara selon l'une des revendications précédentes réalisé en un polymère thermoplastique choisi parmi :
- le polyamide,
- le polyacrylamide, et
- le polyéthercétonecétone.

9. Applicateur pour mascara selon l'une des revendications précédentes, réalisé par fabrication additive par fusion sur lit de poudre d'un polymère thermoplastique.

## Patentansprüche

1. Mascara-Applikator, der eine allgemein längliche Form aufweist und sich entlang einer Hauptachse (A) erstreckt,
wobei der Applikator (1) mindestens drei Schenkel (4) umfasst, die so um die Hauptachse (A) verteilt sind, dass sie zwischen sich einen Hohlraum (5) im Inneren des Applikators (1) definieren, und wobei sich die Schenkel (4) zwischen einer Basis (2), mit der sie verbunden sind, und einem der Basis (2) gegenüberliegenden freien Ende (3) des Applikators (1) erstrecken und so geformt sind, dass der Hohlraum (5) eine Rotationsform um die Hauptachse (A) aufweist, wobei der Hohlraum (5) durch zwischen den Schenkeln (4) gebildete Räume offen ist, wobei die Schenkel (4) auf einer Außenfläche (7) jeweils Vorsprünge (8) umfassen, die sich senkrecht und radial zur Hauptachse (A) erstrecken, wobei die Vorsprünge (8) eine Länge aufweisen, die entlang der Hauptachse (A) variiert, wobei die Länge der Vorsprünge (8) zwischen der Basis (2) und einem Punkt der Hauptachse (A), der sich zwischen der Basis (2) und dem freien Ende (3) des Applikators (1) befindet, kontinuierlich zunimmt und zwischen dem Punkt der Hauptachse (A) und dem freien Ende (3) des Applikators (1) kontinuierlich abnimmt,
**dadurch gekennzeichnet, dass**:
- sich die Schenkel (4) schraubenförmig um die Hauptachse (A) erstrecken,
- der Hohlraum kein Element enthält, das die Basis (2) und das freie Ende (3) des Applikators (1) verbindet,
- jeder Schenkel (4) von der Basis (2) in Richtung des freien Endes (3) ausgehend sich allmählich von der Hauptachse A beabstandet, bevor er sich in der Nähe des freien Endes (3) annähert.

2. Mascara-Applikator nach Anspruch 1, wobei die Schenkel (4) in der Nähe des freien Endes (3), an dem sie miteinander verbunden sind, zusammenlaufen.

3. Mascara-Applikator nach Anspruch 1 oder Anspruch 2, dessen Schenkel fünf (41...45) an der Zahl sind.

4. Mascara-Applikator nach einem der vorstehenden Ansprüche, wobei jeder Vorsprung des Applikators eine Länge im Bereich zwischen 0,2 mm und 2,5 mm aufweist.

5. Mascara-Applikator nach einem der vorstehenden Ansprüche, wobei die Vorsprünge (8) an jedem Schenkel (4) in zwei Reihen oder in drei Reihen zwischen der Basis (2) und dem freien Ende (3) ausgerichtet sind.

6. Mascara-Applikator nach Anspruch 5, wobei die Vorsprünge (8) von zwei aneinandergrenzenden Reihen versetzt angeordnet sind.

7. Mascara-Applikator nach einem der vorstehenden Ansprüche, wobei sich jeder Schenkel von der Basis (2) zum freien Ende (3) des Applikators und um die Hauptachse (A) um einen Winkel im Bereich zwischen 45° und 90°, bevorzugt im Bereich zwischen 55° und 75°, dreht.

8. Mascara-Applikator nach einem der vorstehenden Ansprüche, der aus einem thermoplastischen Polymer hergestellt ist, ausgewählt aus:
- Polyamid,
- Polyacrylamid, und
- Polyetherketonketon.

9. Mascara-Applikator nach einem der vorstehenden Ansprüche, der durch additive Fertigung durch Schmelzen eines thermoplastischen Polymers auf Pulverbett hergestellt ist.

## Claims

1. Applicator for mascara having an oblong general shape and extending along a main axis (A),
the applicator (1) comprising at least three branches (4) distributed around the main axis (A) so as to define a cavity (5) between them inside the applicator(1),
and wherein the branches (4) extend between a base (2) to which they are connected and a free end (3) of the applicator (1), remote from the base (2), and are shaped such that the cavity (5) has a form of a surface of revolution around the main axis (A), said cavity (5) being open by spaces formed between said branches (4)
the branches(4) each comprising, on an outside surface (7), protrusions (8) extending perpendicularly and radially in relation to the main axis (A), the protrusions (8) have a length varying along the main axis (8), the length of the protrusions (8) continuously increasing between the base (2) and a point of the main axis (A) located between said base (2) and the free end (3) of the applicator (1), and continuously decreasing between said point of the main axis (A) and the free end (3) of the applicator (1),
**characterized in that** :
- said branches (4) extend in helical form around the main axis (A),
- the cavity does not contain any element connecting the base (2) and the free end (3) of the applicator (1),
- each branch (4), leaving the base (2) and going towards the free end (3), progressively diverges from the main axis (A) before coming closer in the vicinity of the free end 3.

2. Applicator for mascara according to claim 1, wherein the branches(4) meet in the vicinity of the free end (3) where they are connected together.

3. Applicator for mascara according to claim 1 or claim 2 the branches of which are five in number (41...45).

4. Applicator for mascara according to one of the preceding claims, each protrusion of the applicator having a length comprised between 0.2 mm and 2.5 mm.

5. Applicator for mascara according to one of the preceding claims, wherein, on each branch (4), the protrusions (8) are aligned in two rows or in three rows between the base (2) and the free end (3).

6. Applicator for mascara according to claim 5, wherein the protrusions (8) of two adjacent rows are disposed in staggered arrangement.

7. Applicator for mascara according to one of the preceding claims, wherein each branch turns, from the base (2) to the free end (3) of the applicator and around the main axis (A), through an angle comprised between 45° and 90°, preferably comprised between 55° and 75°.

8. Applicator for mascara according to one of the preceding claims formed from a thermoplastic polymer selected from:
- polyamide,
- polyacrylamide, and
- polyetherketoneketone.

9. Applicator for mascara according to one of the preceding claims formed by additive manufacturing by thermoplastic polymer powder bed fusion.
